# EUROPÄISCHE PATENTSCHRIFT

(11) **EP 1 116 411 B1**
(45) Veröffentlichungstag und Bekanntmachung des Hinweises auf die Patenterteilung: **05.11.2008**
(21) Anmeldenummer: 99969536.4
(22) Anmeldetag: 13.09.1999
(51) Int. Cl.: H04Q 11/04

(54) **VERFAHREN ZUR IDENTIFIZIERUNG EINER AN EINER VERBINDUNG ZWISCHEN EINEM KOMMUNIKATIONSENDGERÄT UND EINER VERMITTLUNGSANLAGE BETEILIGTEN ÜBERGABEEINHEIT**
METHOD FOR IDENTIFYING A TRANSFER UNIT WHICH IS PART OF A CONNECTION BETWEEN A COMMUNICATIONS TERMINAL AND A PRIVATE BRANCH EXCHANGE
PROCEDE POUR IDENTIFIER UNE UNITE DE TRANSMISSION PRENANT PART A UNE CONNEXION ENTRE UN TERMINAL DE COMMUNICATION ET UN CENTRAL TELEPHONIQUE

(30) Priorität: 23.09.1998 DE 19843625
(43) Veröffentlichungstag der Anmeldung: 18.07.2001
(73) Patentinhaber: Siemens Enterprise Communications GmbH & Co. KG, 81379 München (DE)
(72) Erfinder: FRAAS, Wolfgang, D-82515 Wolfratshausen (DE); HÜNLICH, Klaus, D-85467 Neuching (DE)
(74) Vertreter: Maier, Daniel Oliver
(86) Internationale Anmeldenummer: PCT/DE1999/002889
(87) Internationale Veröffentlichungsnummer: WO 2000/017945

(56) Entgegenhaltungen:
- EP-A- 0 822 731
- WO-A-98/38830
- DE-A- 19 604 244
- DE-C- 19 505 271
- "ISDN ORIENTED MODULAR (IOM) ARCHITECTURE - SECOND GENERATION ISDN ICS, IOM-2 INTERFACE" ICS FOR COMMUNICATIONS, EDITION 1989-1990, 1. Januar 1989 (1989-01-01), Seite 68 XP002018364

## Beschreibung

Die Erfindung basiert auf einem Übertragungssystem zur Übertragung von zeitschlitz-orientierten Daten zwischen einer Vermittlungsabschlußeinrichtung - in der Literatur häufig mit 'Exchange Termination' ET bezeichnet - und einem Leitungsabschluß - in der Literatur häufig mit 'Line Termination' LT bezeichnet. Gemäß der Terminologie des Standards ITU-T G.960 (3/93), "access digital section for ISDN basic rate access", insbesondere der Seiten 2 und 3 basiert die Erfindung demnach auf einer Datenübertragung am sogenannten V-Referenzpunkt.

Ein Übertragungssystem zur Übertragung von zeitschlitz-orientierten Daten zwischen einer Vermittlungsabschlußeinrichtung und einem Leitungsabschluß ist üblicherweise Teil eines, eine Vermittlungseinrichtung und Teilnehmeranschlußeinrichtungen aufweisenden Kommunikationssystems. Die Teilnehmeranschlußeinrichtungen weisen dabei Teilnehmerschnittstellen zum Anschluß von Kommunikationsendgeräten an das Kommunikationssystem auf. Die Teilnehmeranschlußeinrichtungen sind gemäß des ITU-T G.960 Standards über einen Leitungsabschluß und eine Vermittlungsabschlußeinrichtung mit der Vermittlungseinrichtung des Kommunikationssystems verbunden. Ein derartiges Kommunikationssystem dient dazu, schmalbandige Kommunikationsverbindungen zwischen an den Teilnehmeranschlußeinrichtungen angeschlossenen Kommunikationsendgeräten auf- bzw. abzubauen und eine schmalbandige Kommunikation - beispielsweise eine Sprach- oder Datenkommunikation - zwischen den Kommunikationsendgeräten zu ermöglichen.

In modernen Kommunikationssystemen erfolgt eine Datenübertragung zwischen der Vermittlungsabschlußeinrichtung und dem Leitungsabschluß dabei üblicherweise auf Basis des zeitschlitz-orientierten, aus einer periodischen Folge von kanalindividuellen Informationssegmenten - im weiteren als Zeitmultiplexkanal bezeichnet - gebildeten Datenformats IOM-2 (ISDN Oriented Modular Interface). Hierbei ist in der Regel jeder Teilnehmerschnittstelle einer Teilnehmeranschlußeinrichtung jeweils ein Zeitmultiplexkanal zugeordnet.

In der modernen Kommunikationstechnik besteht Bedarf an breitbandiger Übertragung von Informationen, wie z.B. von Fest- und Bewegtbildern bei Bildtelefonanwendungen bzw. von großen Datenmengen im Internet. Hierdurch steigt die Bedeutung von Übertragungstechniken für hohe und variable Datenübertragungsraten (größer 100 MBit/s), die sowohl den Anforderungen der Datenübertragung (hohe Geschwindigkeit bei variabler Übertragungsbitrate) als auch den Anforderungen der Sprachdatenübertragung (Erhalt von zeitlichen Korrelationen bei einer Datenübertragung über ein Netz) Rechnung tragen, um so die für die verschiedenen Zwecke derzeit existierenden separaten Netze in einem Netz integrieren zu können. Ein bekanntes Datenübertragungsverfahren für hohe Datengeschwindigkeiten ist der sogenannte Asynchrone Transfer Modus (ATM). Eine Datenübertragung auf Basis des Asynchronen Transfer Modus ermöglicht derzeit eine variable Übertragungsbitrate von bis zu 622 Mbit/s.

Bei dem als Asynchronen Transfer Modus (ATM) bekannten zellbasierten Datenübertragungsverfahren werden für den Datentransport Datenpakete fester Länge, sogenannte ATM-Zellen benutzt. Eine ATM-Zelle setzt sich aus einem, für den Transport einer ATM-Zelle relevante Vermittlungsdaten enthaltenden, fünf Bytes langem Zellkopf, dem sogenannten 'Header' und einem 48 Bytes langem Nutzdatenfeld, der sogenannten 'Payload' zusammen.

Eine Datenübertragung über ein ATM-basiertes Netz erfolgt im allgemeinen im Rahmen von sogenannten virtuellen Pfaden bzw. virtuellen Kanälen. Hierzu werden bei einem Verbindungsaufbau vor Beginn der eigentlichen Nutzdatenübertragung durch Austausch von Signalisierungsinformationen Verbindungstabellen mit aus einer Virtuellen-Kanal-Identifizierung und aus einer Virtuellen-Pfad-Identifizierung bestehenden Vermittlungsinformation in den jeweiligen ATM-Netzknoten des ATM-basierten Netzes eingerichtet. In den Verbindungstabellen ist der Virtuellen-Kanal-Identifizierung ein sogenannter VCI-Wert und der Virtuellen-Pfad-Identifizierung ein sogenannter VPI-Wert zugewiesen. Durch die in der Verbindungstabelle eines ATM-Netzknotens eingetragene Vermittlungsinformation ist festgelegt, wie die virtuellen Pfade bzw. in den virtuellen Pfaden enthaltene virtuelle Kanäle der an dem ATM-Netzknoten ein- und ausgehenden Verbindungen durch die Signalisierung einander zugeordnet sind, d.h. welcher Eingang mit welchem Ausgang vermittlungstechnisch verknüpft ist. Über diese virtuellen Verbindungen (virtuellen Pfade und virtuellen Kanäle) übermittelte ATM-Zellen weisen im Zellkopf im wesentlichen aus einem VPI- und einen VCI-Wert bestehende Vermittlungsdaten auf. Am Eingang eines ATM-Netzknotens werden die ATM-Zellkopf-Daten bearbeitet, d.h. die darin angeordneten Vermittlungsdaten erfaßt und bewertet. Anschließend werden die ATM-Zellen durch den ATM-Netzknoten anhand der in der Verbindungstabelle gespeicherten Vermittlungsinformation an einen, ein bestimmtes Ziel repräsentierenden Ausgang des ATM-Netzknotens durchgeschaltet.

Aus der deutschen Offenlegungsschrift DE 196 04 244 A1 ist ein Übertragungssystem zwischen einer Vermittlungsabschlußeinrichtung und einem Leitungsabschluß bekannt, bei dem die Übertragung über ein ATM-basiertes Netz realisiert wird. Hierbei werden Teilnehmerschnittstellen zum Anschluß von ISDN-orientierten (Integrated Services Digital Network) Kommunikationsendgeräten durch an das ATM-basierte Netz angeschlossene ATM-Übergabeeinheiten - in der Literatur häufig mit ATM-Hub bezeichnet - zur Verfügung gestellt. Die Vermittlungsabschlußeinrichtung des Kommunikationssystems und der durch die ATM-Übergabeeinheit realisierte Leitungsabschluß weisen dabei jeweils eine ATM-Anschlußeinheit auf, über die einerseits eine Verbindung mit dem ATM-basierten Netz realisiert wird und andererseits eine Umwandlung des üblicherweise für eine Datenübermittlung zwischen der Vermittlungsabschlußeinrichtung und dem Leitungsabschluß vorgesehenen IOM-2-Datenformats auf das ATM-basierte Datenformat bzw. des ATM-basierten Datenformats auf das IOM-2-Datenformat erfolgt.

Für die Adressierung einer Teilnehmerschnittstelle der ATM-Übergabeeinheit über das ATM-basierte Netz, wird jedem Zeitmultiplexkanal des IOM-2-Datenformats ein permanent eingerichteter ATM-Kanal des ATM-basierten Netzes zugeordnet, d.h. jeder Teilnehmerschnittstelle einer ATM-Übergabeeinheit wird für eine Datenübertragung über das ATM-basierte Netz eine eindeutige VPI/VCI-Adresse zugeordnet. Hierbei wird die Zuordnung und die Verwaltung der VPI/VCI-Adressen zu den jeweiligen Teilnehmerschnittstellen in der Vermittlungsanlage manuell vorgenommen.

Tritt an einer Teilnehmerschnittstelle bzw. an einem an der Teilnehmerschnittstelle angeschlossenen Kommunikationsendgerät ein Fehler auf, so ist in der Vermittlungsanlage lediglich die VPI/VCI-Adresse der defekten Teilnehmerschnittstelle bzw. des an der Teilnehmerschnittstelle angeschlossenen Kommunikationsendgerätes bekannt. Eine Ermittlung der dem Kommunikationsendgerät zugeordneten ATM-Übergabeeinheit ist nicht möglich.

Ein bereits angewendetes Verfahren die Zuordnung eines Kommunikationsendgerätes zu einer Teilnehmerschnittstelle einer ATM-Übergabeeinheit zu ermitteln, ist die Rückverfolgung des Weges im ATM-basierten Netz ausgehend von der Vermittlungsanlage zum Kommunikationsendgerät, d.h. eine Ermittlung des Weges im ATM-basierten Netz anhand der in den ATM-Netzknoten gespeicherten Vermittlungsinformationen. Dies ist in den meisten Fällen jedoch nicht möglich, da der Betreiber des ATM-basierten Netzes in der Regel nicht der Betreiber des darauf realisierten Telekommunikationsnetzes ist. Somit stehen dem Betreiber des Telekommunikationsnetzes die in den ATM-Netzknoten gespeicherten Vermittlungsinformationen nicht zur Verfügung.

Der vorliegenden Erfindung liegt die Aufgabe zugrunde, ein Verfahren anzugeben, durch welches die einem Kommunikationsendgerät zugeordnete ATM-Übergabeeinheit auf einfache Weise ermittelt werden kann.

Gelöst wird die Aufgabe ausgehend von den Merkmalen des Oberbegriffs des Patentanspruchs 1 durch dessen kennzeichnende Merkmale.

Zum besseren Verständnis der Funktionsweise einer Übertragung von zeitschlitz-orientierten Daten zwischen einer Vermittlungsabschlußeinrichtung und einem Leitungsabschluß erscheint es erforderlich zunächst noch einmal auf bekannte Prinzipien näher einzugehen.

Eine Übertragung der zeitschlitz-orientierten Daten zwischen der Vermittlungsabschlußeinrichtung und dem Leitungsabschluß erfolgt üblicherweise auf Basis des, z.B. aus der Produktschrift "ICs for Communications - IOM^{®}-2 Interface Reference Guide" der Firma Siemens, München, 3/91, Bestell-Nr. B115-H6397-X-X-7600, insbesondere der Seiten 6 bis 12 bekannten Datenformats IOM-2.

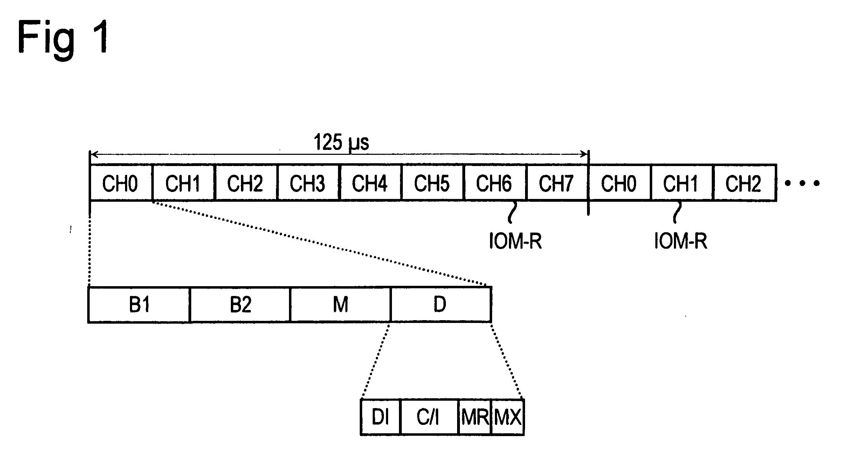

Einem schnelleren Verständnis der Zusammenhänge dient Fig.1, die eine schematische Darstellung des IOM-2-Datenformats zeigt gemäß dem Zeitmultiplexrahmen IOM-R mit einer Länge von 125µs periodisch übertragen werden. Ein derartiger Zeitmultiplexrahmen IOM-R ist in Zeitmultiplexkanäle oder Sub-Rahmen CH0,..,CH7 - in der Literatur auch häufig einfach mit 'Channel' bezeichnet - aufgeteilt. Die Sub-Rahmen CH0,.., CH7 sind wiederum jeweils in zwei 8 Bit lange Nutzdatenkanäle B1, B2, in einen 8 Bit langen Monitorkanal M, in einen 2 Bit langen Steuerinformationskanal DI, in einen 4 Bit langen Statuskanal C/I (Command / Indicate) und zwei jeweils 1 Bit lange Monitorstatuskanäle MR, MX untergliedert. Der Steuerinformationskanal DI, der Statuskanal C/I und die beiden Monitorstatuskanäle MR, MX werden üblicherweise zusammengefaßt als Steuerkanal D bezeichnet.

Über die Nutzdatenkanäle B1, B2 erfolgt eine Nutzdatenübermittlung zwischen an einen IOM-2-Bus angeschlossenen Einrichtungen mit einer Übertragungsbitrate von jeweils 64 kBit/s. Über den Steuerinformationskanal D erfolgt eine Übermittlung von den Nutzdaten zugeordneten Steuerinformationen mit einer Übertragungsbitrate von 16 kBit/s. Der Monitorkanal dient unter anderem zur Konfigurierung von an einen IOM-2-Bus angeschlossenen Einrichtungen ausgehend von einem sogenannten `IOM-2-Busmaster'. Über die Monitorstatuskanäle MR (Monitor Read) und MX (Monitor Transmit) wird festgelegt, ob Daten von einer an den IOM-2-Bus angeschlossenen Einrichtung von IOM-2-Bus gelesen (MR = 1, MX = 0) oder auf den IOM-2-Bus ausgegeben (MR = 0, MX = 1) werden. Über den Statuskanal C/I werden Informationen über im Rahmen einer Datenübermittlung zwischen zwei an den IOM-2-Bus angeschlossenen Einrichtungen bestehenden Echtzeitanforderungen ausgetauscht.

Ein wesentlicher Vorteil des erfindungsgemäßen Verfahrens besteht nun darin, daß das Verfahren auf einfache Weise in bereits bestehende Systeme implementiert werden kann ohne Veränderungen an der Schnittstelle zwischen Vermittlungsanlage und ATM-Übergabeeinheit - gemäß der Terminologie des Standards ITU-T G.960 mit V-Referenzpunkt bezeichnet - vornehmen zu müssen.

Ein weiterer Vorteil des erfindungsgemäßen Verfahren besteht darin, daß durch eine automatische Erfassung der Zuordnung eines Kommunikationsendgerätes zu einer ATM-Übergabeeinheit die Fehleranfälligkeit im Gegensatz zur bisher erfolgenden manuellen Erfassung verringert wird.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch die Nutzung des Monitorkanals zur Übermittlung der Adresse der ATM-Übergabeeinheit an die Vermittlungsanlage vorhandene freie Übertragungskapazitäten genutzt werden.

Ein Ausführungsbeispiel der Erfindung wird im folgenden anhand der Zeichnung näher erläutert.

Dabei zeigen:
- Fig. 2:: ein Strukturbild zur schematischen Darstellung der am erfindungsgemäßen Verfahren beteiligten wesentlichen Funktionseinheiten;
- Fig. 3:: eine schematische Darstellung der Umwandlung des zeitschlitz-orientierten IOM-2-Datenformats in das ATM-Datenformat gemäß eines ersten Umwandlungsmodus;
- Fig. 4:: eine schematische Darstellung der Umwandlung des zeitschlitz-orientierten IOM-2-Datenformats in das ATM-Datenformat gemäß eines zweiten Umwandlungsmodus.

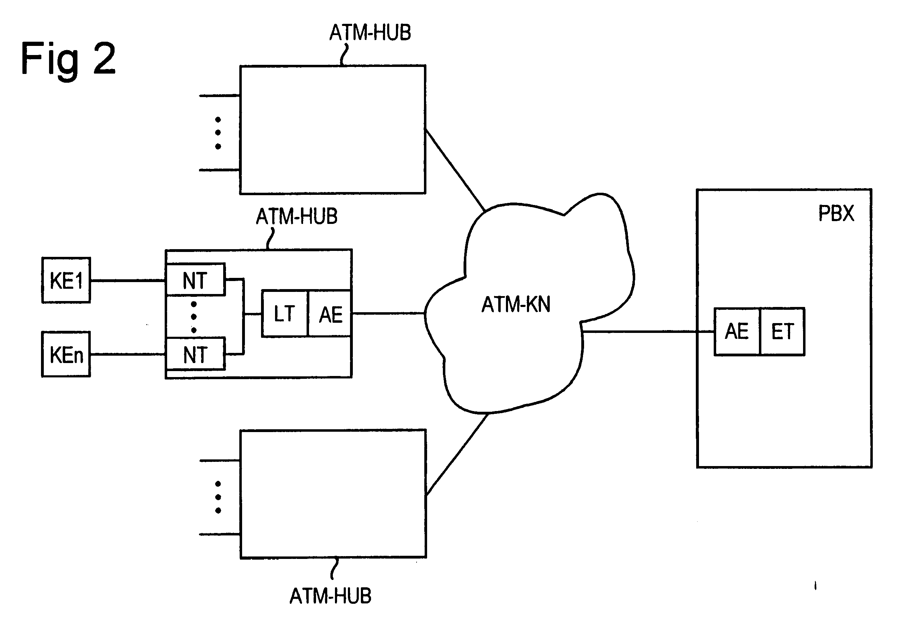

Fig. 2 zeigt eine schematische Darstellung einer Vermittlungsanlage PBX (Privat Branche Exchange) mit einer darin angeordneten Vermittlungsabschlußeinheit ET (Exchange Termination). Die Vermittlungsabschlußeinheit ET ist über eine Anschlußeinheit AE mit einem ATM-basierten Kommunikationsnetz ATM-KN verbunden. An das ATM-basierte Kommunikationsnetz ATM-KN sind des weiteren ATM-Übergabeeinheiten ATM-HUB angeschlossen, welche Teilnehmerschnittstellen zum Anschluß von Kommunikationsendgeräten an das ATM-basierte Kommunikationsnetz ATM-KN aufweisen. Beispielhaft sind Kommunikationsendgeräte KE1,...,KEn dargestellt.

Über eine ATM-Übergabeeinheit werden üblicherweise mittels S₀-Schnittstellen ISDN-Kommunikationsendgeräte (Integrated Services Digital Network) oder mittels daraus abgeleiteten Schnittstellen, wie beispielsweise Uₚ₀-Schnittstellen digitale Kommunikationsendgeräte mit dem ATM-basierten Kommunikationsnetz ATM-KN verbunden. Allgemein umfassen eine Uₚ₀- bzw. eine S₀-Schnittstelle zum einen 2 Nutzdatenkanäle, welche als ISDN-orientierte B-Kanäle mit einer Übertragungsrate von jeweils 64 kBit/s ausgestaltet sind und zum anderen einen Signalisierungskanal, welcher als ISDN-orientierter D-Kanal mit einer Übertragungsrate von 16 kBit/s ausgestaltet ist. Des weiteren besteht generell die Möglichkeit über a/b-Schnittstellen analoge Kommunikationsendgeräte mit dem ATM-basierten Kommunikationsnetz ATM-KN zu verbinden.

Ein Anschluß der Kommunikationsendgeräte KE1,...,KEn an die ATM-Übergabeeinheit ATM-HUB, d.h. die Bereitstellung der Teilnehmerschnittstellen erfolgt durch die ATM-Übergabeeinheit ATM-HUB gemäß der Terminologie des Standards ITU-T G.960 durch Netzabschlüsse NT (Network Termination). Gemäß des Standards ITU-T G.960 sind die Netzabschlüsse einer ATM-Übergabeeinheit ATM-HUB über einen in der ATM-Übergabeeinheit ATM-HUB angeordneten Leitungsabschluß LT mit der Vermittlungsabschlußeinrichtung ET der Vermittlungsanlage PBX verbunden. Für eine Datenübermittlung über das ATM-basierte Kommunikationsnetz ATM-KN ist der Leitungsabschluß LT - entsprechend der Vermittlungsabschlußeinrichtung ET der Vermittlungsanlage PBX - über eine Anschlußeinheit AE mit dem ATM-basierte Kommunikationsnetz ATM-KN verbunden.

Durch die Anschlußeinheiten AE erfolgt eine bidirektionale Umwandlung zwischen dem üblicherweise für eine Datenübermittlung zwischen der Vermittlungsabschlußeinrichtung und dem Leitungsabschluß vorgesehenen, zeitschlitz-orientierten IOM-2-Datenformat und dem paket-orientierten ATM-Datenformat gemäß zweier unterschiedlicher Umwandlungsmodi, die im weiteren näher erläutert werden.

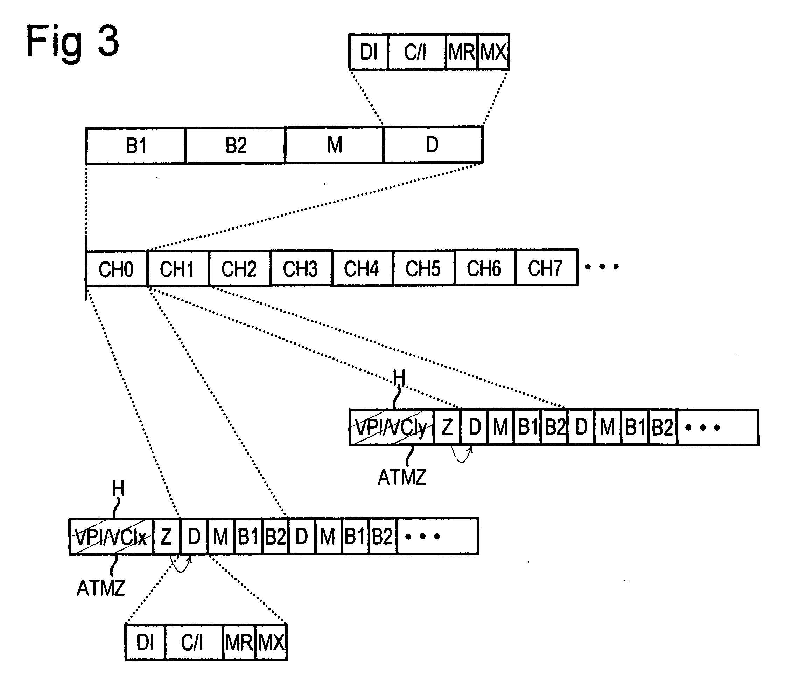

Fig. 3 zeigt in einer schematischen Darstellung die Umwandlung des IOM-2-Datenformats in das ATM-Datenformat gemäß des̅ ersten Umwandlungsmodus. Hierbei werden basierend auf der Vorschrift CES 2.0 des ATM-Forums zeitschlitz-orientierte Daten byteweise in ATM-Zellen gemäß der ersten ATM-Anpassungsschicht AAL1 verpackt. Die ATM-Anpassungsschicht AAL (ATM Adaption Layer) dient dabei einer Anpassung des ATM-Zellformats auf die Vermittlungsschicht (Schicht 3) des OSI-Referenzmodells (Open System Interconnection).

Bei einer Umwandlung des zeitschlitz-orientierten Datenformats auf das paket-orientierte ATM-Datenformat wird jedem Sub-Rahmen CHx eine eindeutige VPI/VCI-Adresse für eine Übermittlung über das ATM-basierte Kommunikationsnetz ATM-KN zugeordnet, d.h. unterschiedlichen Sub-Rahmen CHx zugeordnete Daten werden in separaten ATM-Zellen ATMZ mit einer eindeutigen im Zellkopf H der ATM-Zelle ATMZ hinterlegten VPI/VCI-Adresse - beispielhaft für den Sub-Rahmen CH0 mit der VPI/VCI-Adresse VPI/VCIx und für den Sub-Rahmen CH1 mit der VPI/VCI-Adresse VPI/VCIy dargestellt - übermittelt.

Zusätzlich zum Zellkopf H der ATM-Zelle ATMZ wird innerhalb des Nutzdatenbereiches das erste Byte als Zeiger Z definiert. Dieser Zeiger Z zeigt auf das erste Byte der einem Sub-Rahmen CHx zugeordneten Daten innerhalb des Nutzdatenbereiches eines ATM-Zelle ATMZ. Mittels dieses Zeigers Z ist eine Wiederherstellung der Synchronisation zwischen Sender und Empfänger für den Fall, daß eine oder mehrere ATM-Zellen ATMZ z.B. durch einen Übertragungsfehler verloren gegangen sind, möglich.

Durch die erste ATM-Anpassungsschicht AAL1 werden alle 4 in einem Sub-Rahmen CHx zeitlich aufeinanderfolgenden Kanäle - die beiden Nutzdatenkanäle B1, B2, der Monitorkanal M und der Steuerkanal D - gemäß des ECMA-Standards 277 (Standardizing Information and Communication Systems) byteweise auf das ATM-Zellenformat umgesetzt. Beginnend mit dem zweiten Byte des Nutzdatenbereiches einer ATM-Zelle ATMZ erfolgt die Übermittlung der Nutzdateninformation. Dabei werden nacheinander die den einzelnen Kanälen eines Sub-Rahmens CHx - in der Figur für die Sub-Rahmen CH0, CH1 beispielhaft dargestellt - zugeordneten Daten, beginnend mit den Daten des Steuerkanals D, gefolgt von den Daten des Monitorkanals M, den Daten des ersten Nutzdatenkanals B1 und den Daten des zweiten Nutzdatenkanals B2 übermittelt. Im Anschluß an ein Einfügen der Daten des zweiten Nutzdatenkanals B2 in den Nutzdatenbereich einer ATM-Zelle ATMZ werden die Daten des Steuerkanals D des entsprechenden nachfolgenden-Sub-Rahmens CHx - in der Figur für die Sub-Rahmen CH0, CH1 beispielhaft dargestellt - eingelesen.

Eine Zuordnung der im Nutzdatenbereich einer ATM-Zelle ATMZ angeordneten Bytes zu einem Kanal - zum ersten Nutzdatenkanal B1, zum zweiten Nutzdatenkanal B2, zum Monitorkanal M und zum Steuerkanal D - eines Sub-Rahmens CHx erfolgt somit über die Position des Bytes im Nutzdatenbereich der ATM-Zelle ATMZ.

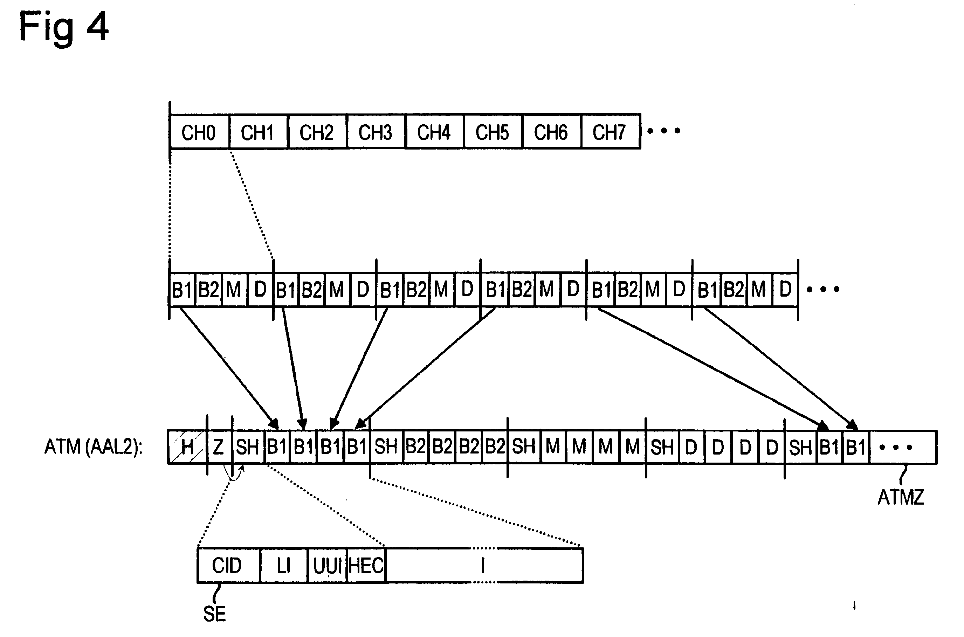

Fig. 4 zeigt in einer schematischen Darstellung die Umwandlung des IOM-2-Datenformats in das ATM-Datenformat gemäß des zweiten Umwandlungsmodus. Hierbei werden zeitschlitz-orientierte Daten byteweise in ATM-Zellen ATMZ gemäß der zweiten ATM-Anpassungsschicht AAL2 verpackt. Im Rahmen der zweiten ATM-Anpassungsschicht AAL2 besteht die Möglichkeit den Nutzdatenbereich einer ATM-Zelle ATMZ in sogenannte Substruktur-Elemente SE zu untergliedern.

Ein Substruktur-Element SE gemäß der zweiten ATM-Anpassungsschicht AAL2 setzt sich aus einem 3 Bytes langem Zellkopf SH und einem Nutzdatenbereich I variabler Länge (0 bis 64 Byte) zusammen. Der Zellkopf SH eines Substruktur-Elementes SE gemäß der zweiten ATM-Anpassungsschicht AAL2 untergliedert sich wiederum in eine 8 Bit lange Kanalidentifizierung CID (Channel Identifier), eine 6 Bit lange Längenidentifizierung LI (Length Indicator), eine 5 Bit lange Sender-Empfänger-Identifizierung UUI (User-to-User Indication) und eine 5 Bit lange Zellkopf-Kontrollsumme HEC (Header Error Control).

Durch die Untergliederung einer ATM-Zelle ATMZ in Substruktur-Elemente SE können innerhalb einer ATM-Verbindung mittels der Kanalidentifizierung CID mehrere Kanäle definiert werden, die alle mit der gleichen ATM-Adresse - bestehend aus einem VPI-Wert und einem VCI-Wert - angesprochen werden. Im Rahmen einer Datenübermittlung zwischen der Vermittlungsanlage PBX und einer ATM-Übergabeeinheit ATM-HUB insbesondere einer Vermittlungsabschlußeinrichtung ET und eines Leitungsabschlusses LT besteht somit die Möglichkeit Substruktur-Elemente SE für die Übermittlung von kanalindividuellen Daten eines Sub-Rahmens CHx zu definieren.

Zusätzlich zum Zellkopf H der ATM-Zelle ATMZ wird innerhalb des Nutzdatenbereiches das erste Byte als Zeiger Z definiert. Dieser Zeiger Z zeigt auf das erste Byte eines innerhalb des Nutzdatenbereiches eines ATM-Zelle ATMZ angeordneten Substruktur-Elementes SE. Mittels dieses Zeigers Z ist eine Wiederherstellung der Synchronisation zwischen Sender und Empfänger für den Fall, daß eine oder mehrere ATM-Zellen ATMZ z.B. durch einen Übertragungsfehler verloren gegangen sind, möglich.

Im vorliegenden Ausführungsbeispiel wird für den ersten Nutzdatenkanal B1, den zweiten Nutzdatenkanal B2, den Monitorkanal M und den Steuerkanal D eines Sub-Rahmens CHx ein individuelles Substruktur-Element SE definiert und im Nutzdatenbereich der ATM-Zelle ATMZ übertragen. Beispielhaft ist in der Figur ein Nutzdatenbereich I des Substruktur-Elementes SE mit einer Länge von 4 Byte dargestellt. Im Anschluß an das dem Steuerkanal D zugeordnete Substruktur-Element SE erfolgt eine Übermittlung des dem ersten Nutzdatenkanal B1 des entsprechenden Sub-Rahmens CHx zugeordneten Substruktur-Elementes SE im Nutzdatenbereich einer ATM-Zelle ATMZ.

Im Gegensatz zu einer ATM-Zelle ATMZ gemäß der ersten ATM-Anpassungsschicht AAL1 erfolgt bei einer ATM-Zelle ATMZ gemäß der zweiten ATM-Anpassungsschicht AAL2 eine Zuordnung eines Nutzdaten-Bytes zu einem Kanal - zum ersten Nutzdatenkanal B1, zum zweiten Nutzdatenkanal B2, zum Monitorkanal M und zum Steuerkanal D - eines Sub-Rahmens CHx nicht über die Position des Nutzdaten-Bytes im Nutzdatenbereich der ATM-Zelle ATMZ sondern über die Kanalidentifizierung CID.

Für eine Adressierung eines an eine ATM-Übergabeeinheit ATM-HUB angeschlossenen Kommunikationsendgerätes KE1,...,KEn ist in der Vermittlungsanlage PBX nur die dem Kommunikationsendgerät KE1,...,KEn im ATM-basierten Kommunikationsnetz ATM-KN zugeordnete VPI/VCI-Adresse bekannt. Eine Lokalisierung des Endgerätes KE1,...,KEn im ATM-basierten Kommunikationsnetz ATM-KN, d.h. eine Zuordnung zu einer ATM-Übergabeeinheit ATM-HUB ist somit aus den in der Beschreibungseinleitung bekannten Gründen nicht möglich.

Für eine Lokalisierung eines Kommunikationsendgerätes KE1, ...,KEn wird erfindungsgemäß jeder ATM-Übergabeeinheit ATM-HUB und gegebenenfalls jedem ATM-Netzknoten eine eindeutige Adresse im ATM-basierten Kommunikationsnetz ATM-KN zugeordnet. Diese Adresse wird in einem nicht-flüchtigen Speicher der ATM-Übergabeeinheit ATM-HUB hinterlegt und ist auf Anfrage abrufbar. Wird der Vermittlungsanlage PBX beispielsweise ein Fehler gemeldet oder ist es aus irgendeinem anderen Grund notwendig die Zuordnung eines Kommunikationsendgerätes KE1, ...,KEn zu einer ATM-Übergabeeinheit zu ermitteln, so übermittelt die Vermittlungsanlage PBX anhand der in der Vermittlungsanlage PBX hinterlegten VPI/VCI-Adresse des Kommunikationsendgerätes KE1, ...,KEn eine entsprechende Anfragemeldung.

Für eine derartige Anfragemeldung werden die in den Monitorstatuskanälen MR, MX übermittelten Bits beide auf den Wert 1 (MR = 1, MX = 1) oder alternativ auf den Wert 0 (MR = 0, MX = 0) gesetzt. Des weiteren besteht die Möglichkeit ein spezielles Protokoll festzulegen, durch welches eine, von der Vermittlungsanlage PBX an ein Kommunikationsendgerät KE1,...,KEn übermittelte Nachricht als Anfragemeldung kennzeichnet. Dieses Protokoll kann dabei über den Signalisierungskanal D oder den Monitorkanal M von der Vermittlungsanlage PBX an die, dem entsprechende Kommunikationsendgerät KE1,...,KEn zugeordnete ATM-Übergabeeinheit ATM-HUB übermittelt werden.

Empfängt eine ATM-Übergabeeinheit ATM-HUB eine derartige Anfragemeldung (MR = 1, MX = 1 oder MR = 0, MX = 0) so übermittelt die ATM-Übergabeeinheit ATM-HUB die ihr im ATM-basierten Kommunikationsnetz ATM-KN zugeordnete Adresse über den Monitorkanal M gemäß des IOM-2-Datenformats. Anhand der über den Monitorkanal M übermittelten Adresse ist durch die Vermittlungsanlage PBX eine Zuordnung des gesuchten Kommunikationsendgerätes KE1,...,KEn zu einer ATM-Übergabeeinheit ATM-HUB möglich.

Die Adresse der ATM-Übergabeeinheit ATM-HUB ist vorteilhafterweise oktettorientiert, d.h. die Länge der Adresse ist ein Vielfaches m (m = 1, 2, 3, ...) von einem Byte. Dies ermöglicht eine einfache Übermittlung der Adresse über den Monitorkanal M, da dieser eine Bandbreite von einem Byte pro Zeitmultiplexrahmen IOMR aufweist.

## Patentansprüche

1. Verfahren zur Identifizierung einer, an einer Verbindung zwischen einem Kommunikationsendgerät (KE1,...,KEn) und einer Vermittlungsanlage (PBX) beteiligten Übergabeeinheit (ATM-HUB),
wobei eine Mehrzahl von Übergabeeinheiten (ATM-HUB) über ein Kommunikationsnetz (ATM-KN) mit der Vermittlungsanlage (PBX) verbunden sind und für eine Datenübermittlung zwischen der Vermittlungsanlage (PBX) und den an den Übergabeeinheiten (ATM-HUB) angeschlossenen Kommunikationsendgeräten (KE1,..., KEn) ein zeitschlitz-orientiertes, aus einer periodischen Folge von kanalindividuellen Informationssegmenten (B1, B2, M, D) gebildetes Datenformat (IOM-2) eingerichtet ist,
**gekennzeichnet dadurch,**
**daß** den Übergabeeinheiten (ATM-HUB) eine eindeutige Adresse im Kommunikationsnetz (ATM-KN) zugeordnet ist, und
**daß** auf Anforderung die Adresse einer Übergabeeinheit (ATM-HUB) von dieser in einem vereinbarten Informationssegment (M) an die Vermittlungsanlage (PBX) übermittelt wird.

2. Verfahren nach Anspruch 1,
**gekennzeichnet dadurch,**
**daß** die Anforderung im Rahmen einer Nachrichtenübermittlung von der Vermittlungsanlage (PBX) an das Kommunikationsendgerät (KE1,...,KEn) erfolgt.

3. Verfahren nach Anspruch 1,
**gekennzeichnet dadurch,**
**daß** die Anforderung im Rahmen einer Nachrichtenübermittlung vom Kommunikationsendgerät (KE1,...,KEn) an die Vermittlungsanlage (PBX) erfolgt.

4. Verfahren nach einem der vorhergehenden Ansprüche,
**gekennzeichnet dadurch,**
**daß** die Übermittlung der Adresse in einem Konfigurierungsinformationen übermittelnden Monitorkanal (M) des zeitschlitz-orientierten Datenformats (IOM-2) erfolgt.

5. Verfahren nach einem der vorhergehenden Ansprüche,
**gekennzeichnet dadurch,**
**daß** die Anforderung **dadurch** angezeigt wird, daß eine vereinbarte Bitkombination in einem Signalisierungskanal (D) des zeitschlitz-orientierten Datenformats (IOM-2) übermittelt wird.

6. Verfahren nach einem der vorhergehenden Ansprüche 1 bis 4,
**gekennzeichnet dadurch,**
**daß** die Anforderung **dadurch** angezeigt wird, daß ein vereinbartes Protokoll in dem Signalisierungskanal (D) und/oder in einem Konfigurierungsinformationen übermittelnden Monitorkanal (M) des zeitschlitz-orientierten Datenformats (IOM-2) übermittelt wird.

7. Verfahren nach einem der vorhergehenden Ansprüche,
**gekennzeichnet dadurch,**
**daß** das zeitschlitz-orientierte Datenformat (IOM-2) das standardisierte IOM-2-Datenformat ist.

8. Verfahren nach Anspruch 7,
**gekennzeichnet dadurch,**
**daß** die Anforderung **dadurch** angezeigt wird, daß über Monitorstatuskanäle (MR, MX) des IOM-2-Datenformats an die Übergabeeinheit (ATM-HUB) übermittelte Bits identisch (MR = MX = 1; MR = MX = 0) sind.

9. Verfahren nach einem der vorhergehenden Ansprüche,
**gekennzeichnet dadurch,**
**daß** die Adreßlänge 1 Byte oder ein ganzzahliges Vielfaches von diesem ist.

10. Verfahren nach einem der vorhergehenden Ansprüche,
**gekennzeichnet dadurch,**
**daß** eine Datenübertragung über das Kommunikationsnetz (ATM-KN) auf Basis des ATM-Datenformats (Asynchroner Transfer Modus) erfolgt.

11. Verfahren nach Anspruch 10,
**gekennzeichnet dadurch,**
**daß** für eine Datenübermittlung über das Kommunikationsnetz (ATM-KN) durch die Vermittlungseinrichtung (PBX) und die Übergabeeinheit (ATM-HUB) eine bidirektionale Umwandlung zwischen dem zeitschlitz-orientierten Datenformat (IOM-2) und dem ATM-Datenformat vorgenommen wird.

12. Verfahren nach Anspruch 11,
**gekennzeichnet dadurch,**
**daß** die bidirektionale Umwandlung zwischen dem zeitschlitz-orientierten Datenformat (IOM-2) und dem ATM-Datenformat gemäß einer als erste ATM-Anpassungsschicht AAL-Typ1 (ATM Adaption Layer) bekannten Vereinbarung erfolgt.

13. Verfahren nach Anspruch 11,
**gekennzeichnet dadurch,**
**daß** die bidirektionale Umwandlung zwischen dem zeitschlitz-orientierten Datenformat (IOM-2) und dem ATM-Datenformat gemäß einer als zweite ATM-Anpassungsschicht AAL-Typ2 bekannten Vereinbarung erfolgt.

## Claims

1. Method for identifying a hub (ATM-HUB) involved in a connection between a communication terminal (KE1,...,KEn) and a switching system (PBX),
a plurality of hubs (ATM-HUB) being connected to the switching system (PBX) via a communication network (ATM-KN) and a time-slot-oriented data format (IOM-2) formed from a periodic sequence of channel-individual information segments (B1, B2, M, D) being set up for a data transmission between the switching system (PBX) and the communication terminals (KE1,...,KEn) connected to the hubs (ATM-HUB),
**characterized in that** the hubs (ATM-HUB) are associated with an unambiguous address in the communication network (ATM-KN) and that, on request, the address of a hub (ATM-HUB) is transmitted by the latter to the switching system (PBX) in an agreed information segment (M).

2. Method according to Claim 1, **characterized in that** the request is made during a message transmission from the switching system (PBX) to the communication terminal (KE1, ... , KEn).

3. Method according to Claim 1, **characterized in that** the request is made during a message transmission from the communication terminal (KE1,...,KEn) to the switching system (PBX) .

4. Method according to one of the preceding claims, **characterized in that** the address is transmitted in a monitor channel (M), transmitting configuration information, of the time-slot-oriented data format (IOM-2).

5. Method according to one of the preceding claims, **characterized in that** the request is indicated by transmitting an agreed bit combination in a signaling channel (D) of the time-slot-oriented data format (IOM-2).

6. Method according to one of the preceding Claims 1 to 4, **characterized in that** the request is indicated by an agreed protocol being transmitted in the signaling channel (D) and/or in a monitor channel (M), transmitting configuration information, of the time-slot-oriented data format (IOM-2).

7. Method according to one of the preceding claims, **characterized in that** the time-slot-oriented data format (IOM-2) is the standardized IOM-2 data format.

8. Method according to Claim 7, **characterized in that** the request is indicated by bits transmitted via monitor status channels (MR, MX) of the IOM-2 data format to the hub (ATM-HUB) being identical (MR = MX = 1; MR = MX = 0).

9. Method according to one of the preceding claims, **characterized in that** the address length is 1 byte or an integral multiple thereof.

10. Method according to one of the preceding claims, **characterized in that** a data transmission via the communication network (ATM-KN) takes place on the basis of the ATM (Asynchronous Transfer Mode) data format.

11. Method according to Claim 10, **characterized in that** a bidirectional conversion is made between the time-slot-oriented data format (IOM-2) and the ATM data format for transmitting data via the communication network (ATM-KN) by the switching system (PBX) and the hub (ATM-HUB).

12. Method according to Claim 11, **characterized in that** the bidirectional conversion between the time-slot-oriented data format (IOM-2) and the ATM data format takes place in accordance with a convention known as first ATM adaptation layer AAL-Type1.

13. The method according to Claim 11, **characterized in that** the bidirectional conversion between the time-slot-oriented data format (IOM-2) and the ATM data format takes place in accordance with a convention known as second ATM adaptation layer AAL-Type2.

## Revendications

1. Procédé pour identifier une unité de transmission (ATM-HUB) impliquée par une connexion entre un terminal de communication (KE1, ..., KEn) et une installation de commutation (PBX),
une pluralité d'unités de transmission (ATM-HUB) étant reliées par un réseau de communication (ATM-KN) à l'installation de commutation (PBX) et un format de données (IOM-2) orienté créneau temporel, formé d'une succession périodique de segments d'information (B1, B2, M, D) individuels par canal étant mis en place pour une transmission de données entre l'installation de commutation (PBX) et les terminaux de communication (KE1, ..., KEn) raccordés aux unités de transmission (ATN-HUB),
**caractérisé en ce que**
une adresse claire est attribuée aux unités de transmission (ATM-HUB) dans le réseau de communication (ATM-KN), et **en ce que**, sur demande, l'adresse d'une unité de transmission (ATM-HUB) est transmise par cette unité dans un segment d'information (M) convenu à l'installation de commutation (PBX).

2. Procédé selon la revendication 1,
**caractérisé en ce que**
la demande s'effectue dans le cadre d'une transmission de message de l'installation de commutation (PBX) au terminal de communication (KE1, ..., KEn).

3. Procédé selon la revendication 1,
**caractérisé en ce que**
la demande s'effectue dans le cadre d'une transmission de message du terminal de communication (KE1, ..., KEn) à l'installation de commutation (PBX).

4. Procédé selon l'une quelconque des revendications précédentes,
**caractérisé en ce que**
la transmission de l'adresse s'effectue dans un canal de moniteur (M) transmettant des informations de configuration, du format de données (IOM-2) orienté créneau temporel.

5. Procédé selon l'une quelconque des revendications précédentes, **caractérisé en ce que**
la demande est affichée par le fait qu'une combinaison binaire convenue est transmise dans un canal de signalisation (D) du format de données (IOM-2) orienté créneau temporel.

6. Procédé selon l'une quelconque des revendications précédentes 1 à 4,
**caractérisé en ce que**
la demande est affichée par le fait qu'un protocole convenu est transmis dans le canal de signalisation (D) et/ou dans un canal de moniteur (M), transmettant des informations de configuration, du format de données (IOM-2) orienté créneau temporel.

7. Procédé selon l'une quelconque des revendications précédentes,
**caractérisé en ce que**
le format de données (IOM-2) orienté créneau temporel est le format de données IOM-2 standardisé.

8. Procédé selon la revendication 7,
**caractérisé en ce que**
la demande est affichée par le fait que des bits transmis par des canaux d'état de moniteur (MR, MX) du format de données IOM-2 à une unité de transmission (ATM-HUB) sont identiques (MR = MX = 1 ; MR = MX = 0).

9. Procédé selon l'une quelconque des revendications précédentes,
**caractérisé en ce que**
la longueur d'adresse est de 1 octet ou un multiple entier de ce nombre.

10. Procédé selon l'une quelconque des revendications précédentes,
**caractérisé en ce que**
une transmission de données s'effectue par le réseau de communication (ATM-KN) sur la base du format de données ATM (Asynchronous Transfer Mode).

11. Procédé selon la revendication 10,
**caractérisé en ce que**
une conversion bidirectionnelle entre le format de données (IOM-2) orienté créneau temporel et le format de données ATM est effectuée pour une transmission de données via le réseau de communication (ATM-KN) par l'installation de commutation (PBX) et l'unité de transmission (ATM-HUB).

12. Procédé selon la revendication 11,
**caractérisé en ce que**
la conversion bidirectionnelle entre le format de données (IOM-2) orienté créneau temporel et le format de données ATM s'effectue selon un accord connu comme première couche d'adaptation ATM AAL-Typ1 (ATM Adaptation Layer).

13. Procédé selon la revendication 11,
**caractérisé en ce que**
la conversion bidirectionnelle entre le format de données (IOM-2) orienté créneau temporel et le format de données ATM s'effectue selon un accord connu comme seconde couche d'adaptation ATM AAL-Typ2.
